# EUROPEAN PATENT APPLICATION

(11) **EP 2 009 972 A1**
(43) Date of publication of application: **31.12.2008**
(21) Application number: 06798269.4
(22) Date of filing: 22.09.2006
(51) Int. Cl.: H05K 5/02, H04M 1/02

(54) **MOBILE TERMINAL**

(71) Applicant: Panasonic Corporation, Kadoma-shi Osaka 571-8501 (JP)
(72) Inventor: KOUNO, Kazunori, c/o Matsushita Elec. Industrial Co., Ltd., 1-3-7 Shiromi, Chuo-ku, Osaka 540-6319 (JP); SATOU, Noriyoshi, c/o Matsushita Elec. Industrial Co., Ltd., 1-3-7 Shiromi, Chuo-ku, Osaka 540-6319 (JP)
(74) Representative: Grünecker, Kinkeldey, Stockmair & Schwanhäusser Anwaltssozietät
(86) International application number: PCT/JP2006/318881
(87) International publication number: WO 2008/035441

(57) **Abstract**

A portable terminal is provided, which can be thinned as a whole and can reduce a dimension of a step between a first housing and a second housing.

A portable terminal 10 includes, on a back surface 11A of an upper housing (first housing) 11, a first projection part 27 provided in a position corresponding to a display part 16, and a first flat part 28 adjacent to the first projection part 27; and, on a surface 12A of a lower housing (second housing) 12, a second projection part 31 provided in a position corresponding to a main operational part 22, and a second flat part 32 adjacent to the second projection part 31. In a closing state of the portable terminal, the first projection part 27 faces to the second flat part 32 and the second projection part 31 faces to the first flat part 28.

## Description

### TECHNICAL FIELD

The present invention relates to a portable terminal, and particularly to a portable terminal which can select a closing state in which a first housing and a second housing are laminated so that a back surface of the first housing and a surface of the second housing to each other, and an opening state in which the back surface of the first housing and the surface of the second housing move relatively to each other in parallel thereby to be arranged on different levels.

### BACKGROUND ART

In a portable terminal in Patent Document 1, on a surface of an upper housing, a display part (LCD) and a sub-operational part are provided; and on a surface of a lower housing, a main operational part are provided. The main operational part includes a large number of input keys and function keys.
This portable terminal, by moving the upper housing and the lower housing relatively to each other through a coupling part, can select a closing state in which the upper housing and the lower housing are laminated so that a back surface of the upper housing and a surface of the lower housing face to each other, and an opening state in which the back surface of the upper housing and the surface of the lower housing move relatively to each other in parallel thereby to be arranged on different levels (refer to Patent Document 1).
In such a portable terminal, in the opening state, the sub-operational part of the upper housing and the main operational part of the lower housing are adjacent to each other, so that the sub-operational part and the main operational part are operated in combination with each other.
Patent Document 1: Japanese Patent No. 3241669

### DISCLOSURE OF THE INVENTION

### PROBLEMS TO BE SOLVED IN THE INVENTION

In the conventional portal terminal, based on the thickness dimension determined on the basis of the thickest (or the tallest) electronic component of electronic components housed in the laminated first housing (upper housing) and second housing (lower housing), and specifically on the basis of the display part (LCD) or the electric cell, the first housing and the second housing are formed in the shape of a rectangular solid. Therefore, there is a limit to reduction of the whole thickness dimension of the portable terminal, and dead space exists.

Further, in this portable terminal, in the opening state, a step corresponding to the thickness dimension of the first housing is produced between the sub-operational part and the main operational part.
Since such a step becomes an obstacle in operating the sub-operational part and the main operation part in combination, it is desirable that height of the step is as small as possible.

The invention has been made in order to meet the aforesaid demands, and it is an object of the invention to provide, in a portable terminal which is put in an opening state from a closing state in which the first housing and the second housing are laminated by moving the opposite surfaces of a first housing and a second housing in parallel, the portable terminal in which the whole thickness can be reduced and the height of the step between the first housing and the second housing in the opening state can be reduced.

### MEANS FOR SOLVING THE PROBLEMS

A portable terminal of the invention includes a first housing and a second housing coupled to each other through a coupling part, and takes a closing state in which the first housing and the second housing are superimposed on each other through the coupling part, and an opening state in which the portable terminal extends by sliding the first housing and the second housing. The portable terminal is characterized in that: the first housing is constituted so that a thickness of an end of the first housing in the moving direction when the closing state of the portable terminal changes to the opening state thereof is made thicker than a thickness of an opposite side end; the second housing is constituted so that a thickness of an end of the second housing in the moving direction when the closing state of the portable terminal changes to the opening state thereof is made thinner than a thickness of an opposite side end; in the closing state, the opposite side end of the first housing and the opposite side end of the second housing are superimposed; in the opening state, the opposite side end of the first housing and the end in the moving direction of the second housing are superimposed; and when the closing state changes to the opening state, a gap is formed in the moving direction of the housings by the first housing and the second housing.

Further, a portable terminal of the invention includes a first housing and a second housing coupled to each other through a coupling part, and takes a closing state in which the first housing and the second housing are superimposed on each other through the coupling part, and an opening state in which the portable terminal extends by sliding the first housing and the second housing. The portable terminal is **characterized in that:** the first housing includes a first part and a second part which is thicker in the thickness direction than the first part; the second housing includes a third part and a fourth part which is thicker in the thickness direction than the third part; and in the closing state of the portable terminal, the first part of the first housing faces to the fourth part of the second housing, and the second part of the first housing faces to the fourth part of the second housing.

By providing the fist part and the second part on the back surface of the first housing, the back surface is formed concavo-convexly. By providing the third part and the fourth part on the surface of the second housing, the surface is formed concavo-convexly.
Since, a key sheet used as a sub-operational part for example is a comparatively thin electronic component, it is arranged in the portion corresponding to the first part of the first housing. On the other hand, since a display part is an electronic component that is thicker than the key sheet, the display part is arranged in the portion corresponding to the second part.

Thus, other portions than the necessary portion can be thinned, and dead space is not produced in the first housing.
Similarly to in the first housing, also in the second housing, other portions than the necessary portion can be thinned, and dead space is not produced in the second housing.
The dead space means unnecessary space which is unavailable.
Hereby, by facing the second part to the third part and facing the fourth part to the first part in the closing state of the portable terminal, the thickness of the portable terminal can be reduced as a whole.

Further, the thickness of the first part of the first housing can be restrained to the thickness corresponding to the comparatively thin sub-operational part. The operational part (main operational part) is provided in the fourth part of the second housing.
Therefore, in the opening state of the portable terminal, the dimension of the step between the sub-operational part of the first housing and the main operational part (operational part) of the second part can be reduced compared with the conventional dimension.
Hereby, when the main operational part of the second housing and the sub-operational part of the first housing are operated in combination, smooth operation can be obtained.

Further, the sub-operational part is arranged on the first part of the first housing, and the display part is arranged on the portion corresponding to a first projection surface. Further, on the fourth part of the second housing, the operational part (main operational part) is arranged.
Since the second part is faced to the third part and the fourth part is faced to the first part in the closing state of the portable terminal, the display part and the main operational part of the second housing are not overlapped in the thickness direction. Accordingly, the thickness of the portable terminal can be reduced as a whole.

In embodiments, the portions corresponding to the first part and the second part are described respectively as a first flat part and a second flat part, and the portions corresponding to the third part and the fourth part are described respectively as a first projection part and a second projection part.

Further, the portable terminal of the invention includes a first circuit board housed in the first housing, a second circuit board housed in the second housing, and a flexible wiring member which connects the first circuit board and the second circuit board, and is **characterized in that** the flexible wiring member is arranged in a gap formed between the second part and the fourth part in the opening state of the portable terminal.

In the opening state of the portable terminal, the flexible wiring member is arranged in a gap formed between the first part and the third part.
Since the flexible wiring member is arranged in the gap which does not appear till the opening state of the portable terminal, the dead space can be reduced compared with the conventional portable terminal. Hereby, the size-reduction and the thickness-reduction of the portable terminal can be obtained.
To the contrary, conventionally, regardless of the closing state or the opening state, the space in which the flexible wire can move was secured. Therefore, this space became the dead space.

Further, the portable terminal of the invention is **characterized in that** a wall part which covers sides of the aforesaid gap is provided on one of the first housing and the second housing.

Since the wall part which covers the sides of the gap is provided on one of the first housing and the second housing, the exposure of the flexible wiring member can be prevented by the wall part in the opening state of the portable terminal thereby to protect the flexible wiring member.
Further, by providing the wall parts which covers the sides of the gap, good grippable function by user can be secured.

Further, a portable terminal of the invention includes a first housing and a second housing coupled to each other through a coupling part, a display part provided on a surface of the first housing, and an operational part provided on a surface of the second housing, in which the coupling part includes a rail provided on one of a back surface of the first housing and a surface of the second housing, and an engagement part which is provided on the other of the back surface of the first housing and the surface of the second housing to engage with the rail, and a closing state in which the first housing and the second housing are superimposed on each other through the coupling part, and an opening state in which the portable terminal extends by sliding the first housing and the second housing can be taken by moving the first housing and the second housing relatively to each other through the coupling part. The portable terminal is **characterized in that**: the first housing includes a first part and a second part which is thicker in the thickness direction than the first part; the second housing includes a third part and a fourth part which is thicker in the thickness direction than the third part; in the closing state of the portable terminal, the first part of the first housing faces to the fourth part of the second housing, and the second part of the first housing faces to the fourth part of the second housing; and an end of the rail is housed in one of the first housing and the second housing.

Since the end of the rail is housed in one or both of the first housing and the second housing in the invention, the full length of the rail can be set to the large size, so that an enough extension stroke when the portable terminal is put in the opening state can be secured.

### ADVANTAGE OF THE INVENTION

According to the portable terminal of the invention, the back surface of the first housing is formed concavo-convexly, the surface of the second housing is formed concavo-convexly, and the concave portions and the convex portions of the housings are faced to each other, whereby the thickness of the portable terminal can be reduced as a whole, and the dimension of the step between the first housing and the second housing in the opening state can be reduced

### BRIEF DESCRIPTION OF THE DRAWINGS

Fig. 1A is a perspective view showing a closing state of a portable terminal (in a first embodiment) according to the invention, and Fig. 1B is a perspective view showing an opening state of the portable terminal in the first embodiment.
Fig. 2 is an exploded perspective view of the portable terminal in the first embodiment.
Fig. 3A is a perspective view showing a closing state of a coupling part in the first embodiment, and Fig. 3B is a perspective view showing an opening state of the coupling part in the first embodiment.
Fig. 4 is a sectional view of the disassembled portable terminal in the embodiment.
Fig. 5A is a sectional view showing the closing state of the portable terminal in the first embodiment, and Fig. 5B is a sectional view showing the opening state of the portable terminal in the first embodiment.
Fig. 6A is a perspective view showing a closing state of a portable terminal (in a second embodiment) according to the invention, and Fig. 6B is a perspective view showing an opening state of the portable terminal in the second embodiment.
Fig. 7 is an exploded perspective view of the portable terminal in the second embodiment.
Fig. 8A is a perspective view showing a closing state of a portable terminal (in a third embodiment) according to the invention, and Fig. 8B is a perspective view showing an opening state of the portable terminal in the third embodiment.
Fig. 9 is an exploded perspective view of the portable terminal in the third embodiment.
Fig. 10A is a perspective view showing a closing state of a portable terminal (in a fourth embodiment) according to the invention, and Fig. 10B is a perspective view showing an opening state of the portable terminal in the fourth embodiment.
Fig. 11A is a perspective view showing a closing state of a portable terminal (in a fifth embodiment) according to the invention, and Fig. 11B is a perspective view showing an opening state of the portable terminal in the fifth embodiment.
Fig. 12 is an exploded perspective view of the portable terminal in the fifth embodiment.
Fig. 13A is a perspective view showing a closing state of a portable terminal (in a sixth embodiment) according to the invention, and Fig. 13B is a perspective view showing an opening state of the portable terminal in the sixth embodiment.
Fig. 14A is a sectional view showing a modified example 1 of the portable terminal in the sixth embodiment, Fig. 14B is a sectional view showing a modified example 2 of the portable terminal in the sixth embodiment, Fig. 14C is a sectional view showing a modified example 3 of the portable terminal in the sixth embodiment, and Fig. 14D is a sectional view showing a modified example 4 of the portable terminal in the sixth embodiment.

10, 50, 55, 60, 70, 90, 100, 110, 120, 130 Portable terminal
11, 71, 102, 112, 122, 133 Upper housing (first housing)
11A Surface of upper housing (surface of first housing)
12, 72, 101, 131 Lower housing (second housing)
12A Back surface of lower housing (back surface of second housing)
13 Coupling part
15 First circuit board
16 Display part
17 Sub-operational part
21 Second circuit board
22 Main operational part (operational part)
25 Flexible printed board (flexible wiring member)
27, 74, 107, 116, 126, 138 First projection part (second part)
28, 75, 106, 115, 125, 139 First flat part (first part)
31, 76, 103, 134 Second projection part (fourth part)
31A Back surface of second projection part (back surface of projection surface)
32, 77, 104, 135 Second flat part (third part)
38 Rail
38B Leading end of rail (end of rail)
39 Engagement part
48 Gap
51, 56 Wall part
91, 107, 111, 121, 132 Intermediate housing

### BEST MODE FOR CARRYING OUT THE INVENTION

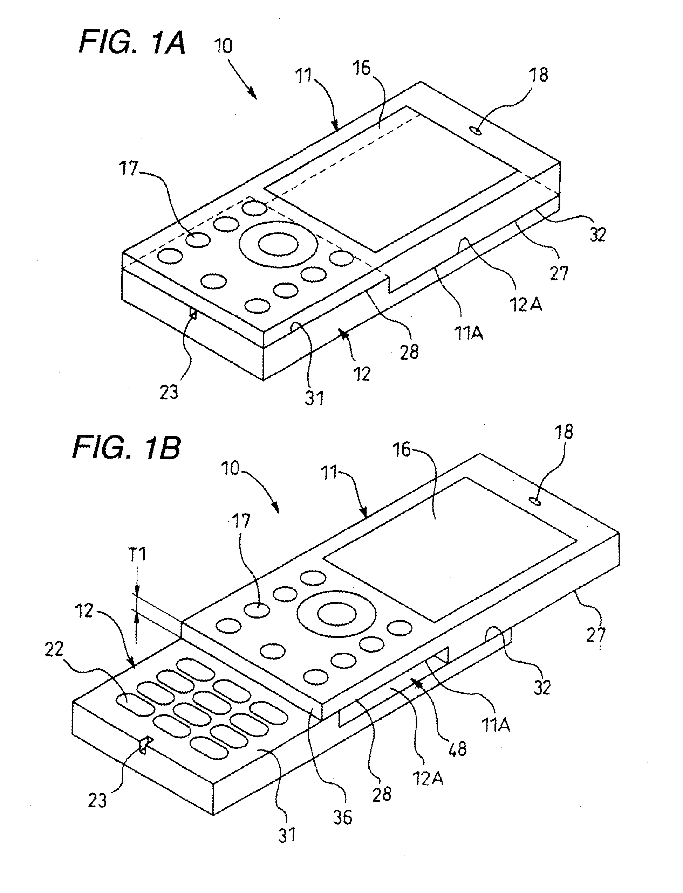

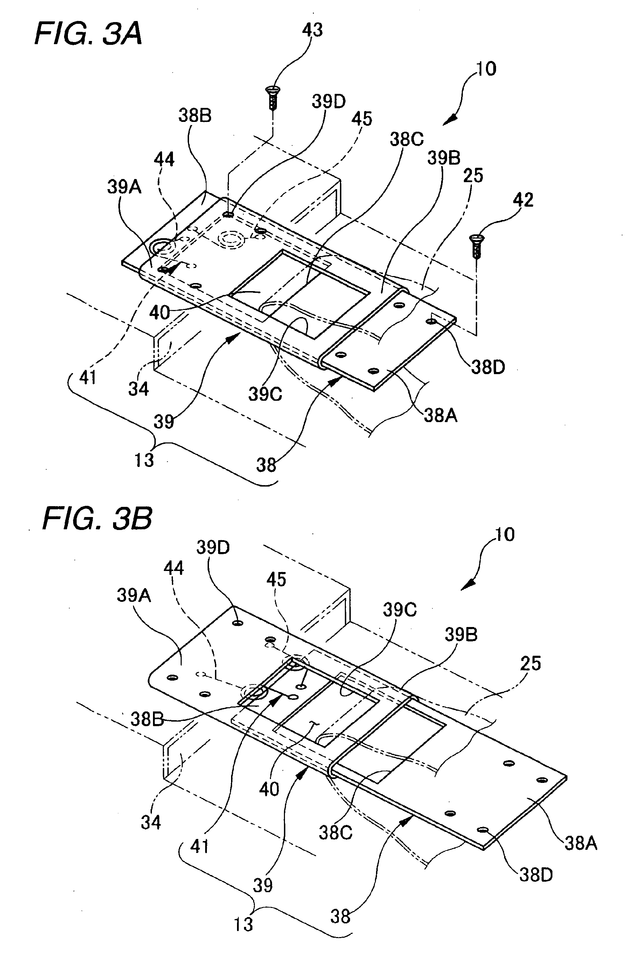

Portable terminals according to embodiments of the invention will be described below with reference to drawings.
As shown in Figs. 1A to 3B, a portable terminal 10 according to a first embodiment includes an upper housing (first housing) 11; a lower housing (second housing) 12; a coupling part 13 which couples the upper housing 11 and the lower housing 12 slidably; a first circuit board 15 housed in the upper housing 11; a display part (LCD) 16, a sub-operational part 17, and a receiver 18 which are provided on a surface 11A of the upper housing 11; a second circuit board 21 housed in the lower housing 12; a main operational part (operational part) 22 and a microphone 23 which are provided on a surface 12A of the lower housing 12; and a flexible printed board (flexible wiring member) 25 which connects the fist circuit board 15 and the second circuit board 21. The portable terminal 10 is a slide type which can take a closing state in which the upper housing 11 and the lower housing 12 are superimposed on each other through the coupling part 13, and an opening state in which the portable terminal 10 is extended by sliding the upper housing 11 and the lower housing 12.

The main operational part 22 and the sub-operational part 17 include a large number of input keys and function keys.
Though the flexible printed board is indicated as an example of the flexible wiring member 25, the flexible wiring member is not limited to this example but may use the ordinary wiring.

The upper housing 11 has, on its back surface 11A, a first projection part (second part) 27 provided in a position corresponding to the display part 16, and a first flat part (first part) 28 which is adjacent to the first projection part 27 and provided in a position corresponding to the sub-operational part 17.
In the upper housing 11, its thickness of a leading end portion in the movement direction toward which the portable terminal changes from the closing state to the opening state is thicker than the thickness of an opposite side end portion.
Therefore, in the back surface 11A of the upper housing 11, the first flat part 28 is formed in the concave shape, and the first projection part 27 is formed in the convex shape.

The lower housing 12 has, on its surface 12A, a second projection part (fourth part) 31 provided in a position corresponding to the main operational part 22, and a second flat part (third part) 32 which is adjacent to the second projection part 31.
In the lower housing 12, its thickness of a leading end portion in the movement direction toward which the portable terminal 10 changes from the closing state to the opening state is thicker than the thickness of an opposite side end portion.
Therefore, in the surface 12A of the lower housing 12, the second flat part 32 is formed in the concave shape, and the second projection part 31 is formed in the convex shape.
The second part 31 has an opening part 34 formed in a portion facing to the second flat part 32

The first projection part 27 and the first flat part 28 of the upper housing 11, and the second projection part 31 and the second flat part 32 of the lower housing 12 are constituted so that the first projection part 27 faces to the second flat part 32 and the second projection part 31 faces to the first flat part 28 in the closing state of the portable terminal 10.

For the sub-operational part 17, a key sheet is usually used. Since the key sheet used for the sub-operational part 17 is a comparatively thin electronic component, the key sheet is arranged in a portion corresponding to the first flat part 28 of the upper housing 11. On the other hand, since the display part 16 is an electronic component which is thicker than the sub-operational part 17, the display part 16 is arranged in a portion corresponding to the first projection part 27.
Thus, correspondingly to the thickness dimensions of the sub-operational part 17 and the display part 16, the unevenness is given to the shape of the back surface 11A of the upper housing 11, whereby the portions other than the portion in which the display part 16 is arranged can be thinned, and the dead space can be removed from the upper housing 11.

Similarly to the upper housing 11, the lower housing 12 can be also slimmed except for the necessary portion, and the dead space can be removed from the lower housing 12.
Hereby, in the closing state of the portable terminal, the first projection part 27 is faced to the second flat part 32 and the second projection part 31 is faced to the first flat part 28, whereby the thickness of the portable terminal 10 can be reduced as a whole.

Further, the thickness dimension of the first flat part 28 of the upper housing 11 can be restrained to the thickness corresponding to the comparatively thin sub-operational part 17. Therefore, a dimension T1 of a step 36 between the sub-operational part 17 of the upper housing 11 and the main operational part 22 of the lower housing 12 can be made smaller than that in the conventional portable terminal.
Hereby, when the main operational part 22 of the lower housing 12 and the sub-operational part 17 of the upper housing 11 are operated in combination, smooth operation can be obtained.

Further, the sub-operational part 17 is arranged on the first flat part 28 of the upper housing 11, and the display part 16 is arranged in the portion corresponding to the first projection part 27. Further, in the second projection part 31 of the lower housing 12, the main operational part 22 is arranged.
In the closing state of the portable terminal 10, the first projection part 27 is faced to the second flat part 32 and the second projection part 31 is faced to the first flat part 28.
Therefore, the display part 16 and the main operational part 22 of the lower housing 12 are not overlapped in the thickness direction. Accordingly, the thickness of the portable terminal 10 can be reduced as a whole.

As shown in Figs. 3A to Fig. 5B, the coupling part 13 includes a rail 38 provided on the back surface 11A of the upper housing 11, an engagement part 39 which is provided on the surface 12A of the lower housing 12 to engage with the rail 38, and a spring member 41 which holds the engagement part 39 in the closing state and the opening state.

The rail 38 is a nearly rectangular plate, in which a rail opening portion 38C is formed near its leading end 38B (end), and a threaded hole 38D is formed in its base end 38A.
The rail 38 is attached at its base end 38A to the first flat part 28 of the back surface 11A of the upper housing 11.

Specifically, into an attachment hole (not shown) of the first flat part 28 on the back surface 11A of the upper housing 11, a fastening member (for example, screw) 42 is inserted, and the screw portion protruding from the attachment hole is tighten into the threaded hole 38D, whereby the base end 38A of the rail 38 is attached to the first flat part 28.

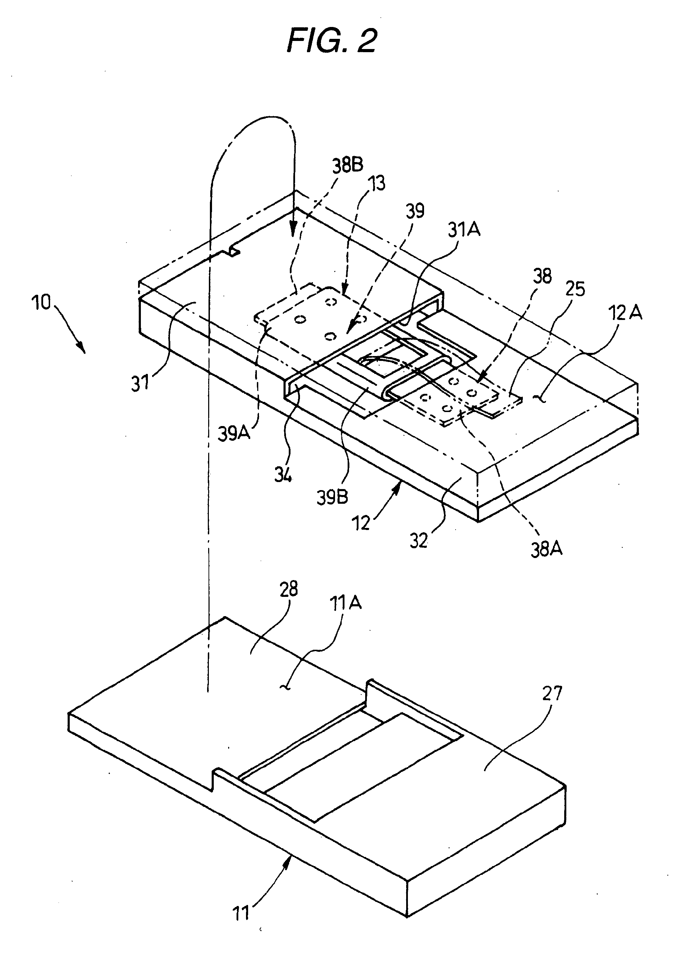

In this rail 38, in the closing state of the portable terminal 10, the leading end (end) 38B is housed through the opening part 34 of the second projection part 31 into the second projection part 31 (refer to Fig. 2). Namely, in the rail 38, in the closing state of the portable terminal 10, the leading end 38B is arranged on the back surface 31A side (on the inside) in the second projection part 31.
In the embodiment, the second projection part 31 is formed integrally with the lower housing (second housing) 12, and the rail 38 is housed through the opening part 34 of the second projection part 31 into the second projection part 31. However, there may be adopted the structure in which the second projection part 31 is formed separately from the lower housing (second housing) 12, and the rail 38 is arranged in the predetermined position and thereafter a member corresponding to the second projection part 31 is laminated and attached onto the lower housing (second housing) 12 thereby to house the rail 38 into the second projection part 31 resultantly.

The engagement part 39 is slidably engaged with the rail 38, and an engagement opening part 39C is formed near a base end 39B and a threaded hole 39D is formed in a leading end 39A.
In the engagement part 39, the leading end 39A is housed into the second projection part 31 of the surface 12A of the lower housing 12, thereby to be attached to the second projection part 31.

Specifically, a fastening member (for example, screw) 43 is inserted into an attachment hole (not shown) of the second projection part 31 of the back surface 11A of the upper housing 11, and the screw portion protruding from the attachment hole is tighten into the threaded hole 39D, whereby the leading end 39A of the engagement part 39 is attached to the second projection part 31.
Hereby, in the engagement part 39, the leading end 39A is housed on the back surface 31A side of the second projection part 31.

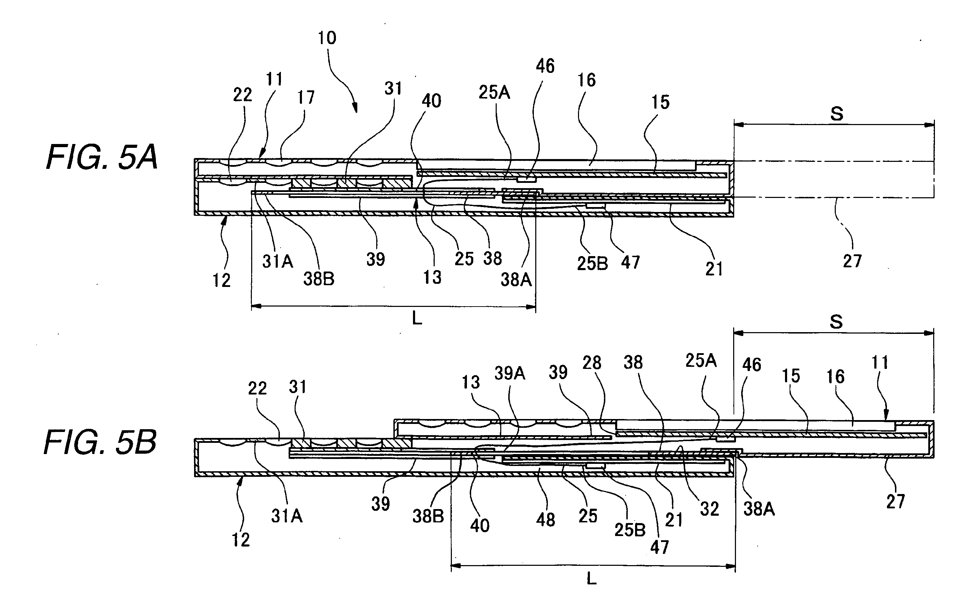

In the rail 38 of the coupling part 13, in the closing state of the portable terminal 10 which is shown in Fig. 5A, the leading end 38B is housed on the back surface 31A side of the second projection part 31.
Further, in the engagement part 39 of the coupling part 13, the leading end 39A is arranged on the back surface 31A side of the second projection part 31.
Hereby, a full length L (refer to Figs. 5A and 5B) of the rail 38 can be made large, with the result that an extension stroke S (refer to Figs 5A and 5B) when the portable terminal 10 is extended can be secured sufficiently.

As shown in Figs. 3A and 3B, the spring member 41 has a pair of coil-shaped spring members 44, 45. By one 44 of the coil-shaped spring member pair 44, 45, the upper housing 11 and the lower housing 12 are held in the closing state, and by the other spring member 45, the upper housing 11 and the lower housing 12 are held in the opening state.

It is possible to select the closing state in which the upper housing 11 and the lower housing 12 are laminated on each other so that the back surface 11A of the upper housing 11 and the surface 12A of the lower housing 12 face to each other by relatively moving the upper housing 11 and the lower housing 12 through this coupling part 13, and the opening state in which the upper housing 11 and the lower housing 12 are arranged on different levels by relatively moving the back surface 11A of the upper housing 11 and the surface 12A of the lower housing 12 in parallel.

The rail opening part 38C of the rail 38 and the engagement opening part 39C of the engagement part 39, in the closing state (state in Fig. 3A) and the opening state (state in Fig. 3B) of the portable terminal 10, are kept in the superimposition state.
Therefore, in the closing state and the opening state of the portable terminal 10, a through-hole 40 is formed by the rail opening part 38C and the engagement opening part 39C. Into the through-hole 40, the flexible printed board 25 penetrates.

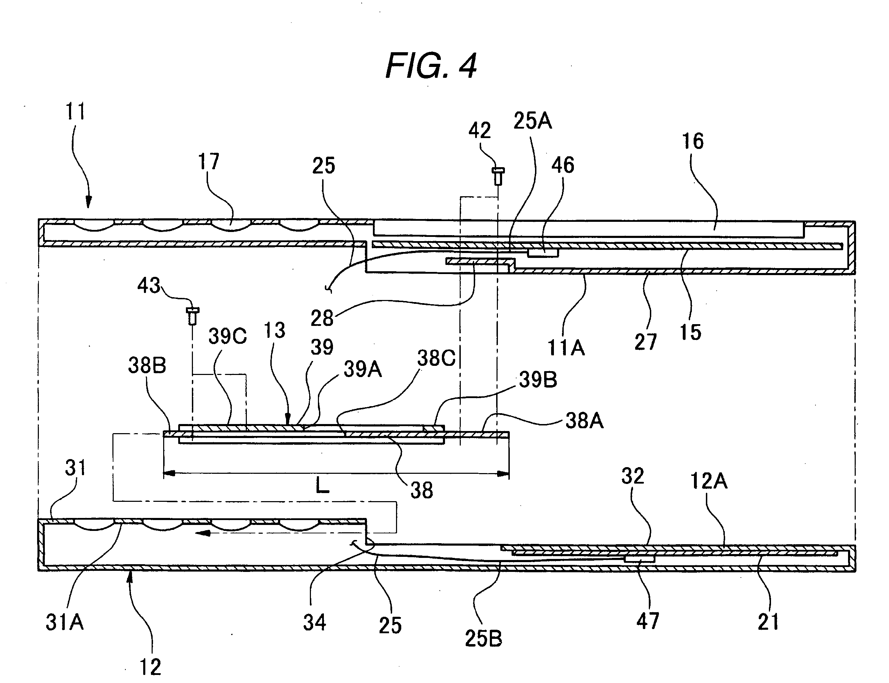

As shown in Figs. 4 to 5B, the first circuit board 15 is housed on a back surface side 16A (that is, in the first projection part 27) of the display part 16 of the upper housing 11.
The second circuit board 21 is housed in the second flat part 32 of the lower housing 12.
One end 25A of the flexible printed board 25 is connected through a connector 46 to the first circuit board 15, and the other end 25B of the flexible printed board 25 is connected through a connector 47 to the second circuit board 21.
Therefore, the first circuit board 15 and the second circuit board 21 are connected through the flexible printed board 25.

The flexible printed board 25, as shown in Figs. 5A and 5B, in the closing state and the opening state of the portable terminal 10, extends from the first circuit board 15 along the upside of the coupling part 13 to the through-hole 40, is bent through the through-hole 40 to the downside of the coupling part 13, and extends along the downside of the coupling part 13 to the second circuit board 21.

Namely, the flexible printed board 25 is bent nearly in the U-shape in the closing state and opening state of the portable terminal 10.
As shown in Fig. 5B, this flexible printed board 25 is arranged in a gap 48 formed between the first flat part 28 and the second flat part 32, so as to extend gradually in the gap 48 formed by detachment of the step surface between the first projection part 27 and the first flat part 28 from and the step surface between the second projection part 31 and the second flat part 32, when the portable terminal 10 shifts from the closing state to the opening state.
Since the flexible printed board 25 is arranged in the gap 48 which appears when the portable terminal 10 shifts from the closing state to the opening state, the dead space can be reduced, compared with the conventional portable terminal. Hereby, size-reduction and thickness-reduction of the portable terminal 10 can be obtained.

In the aforesaid portable terminal 10, if the coupling part 13 is arranged only between the first projection part 27 of the upper housing (first housing) 11 and the second flat part 32 of the lower housing (second housing) 12, the sufficient engagement length between the rail 38 and the engagement part 39 cannot be secured in the opening state. Therefore, it is difficult to secure strength when such external force as to bend the upper housing 11 and the lower housing 12 relatively in the opening state is applied.
To the contrary, according to the portable terminal 10 in the aforesaid embodiment, since the rail 38 and the engagement part 39 which constitute the coupling part 13 are housed in the second projection part 31, the sufficient engagement length between the rail 38 and the engagement part 39 can be secured in the opening state. Hereby, the sufficient strength in the opening state can be obtained.

### SECOND EMBODIMENT

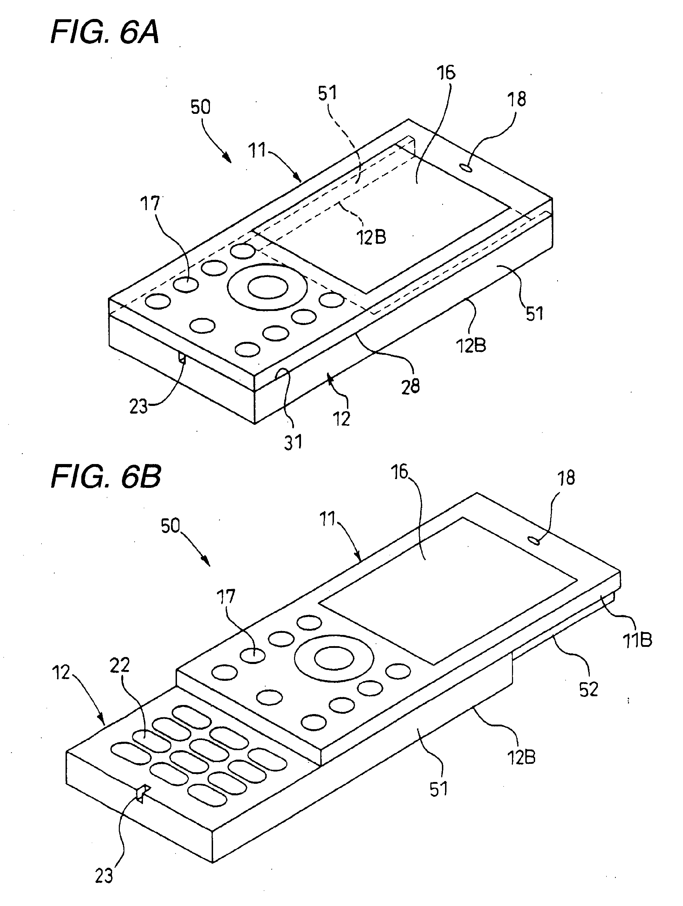

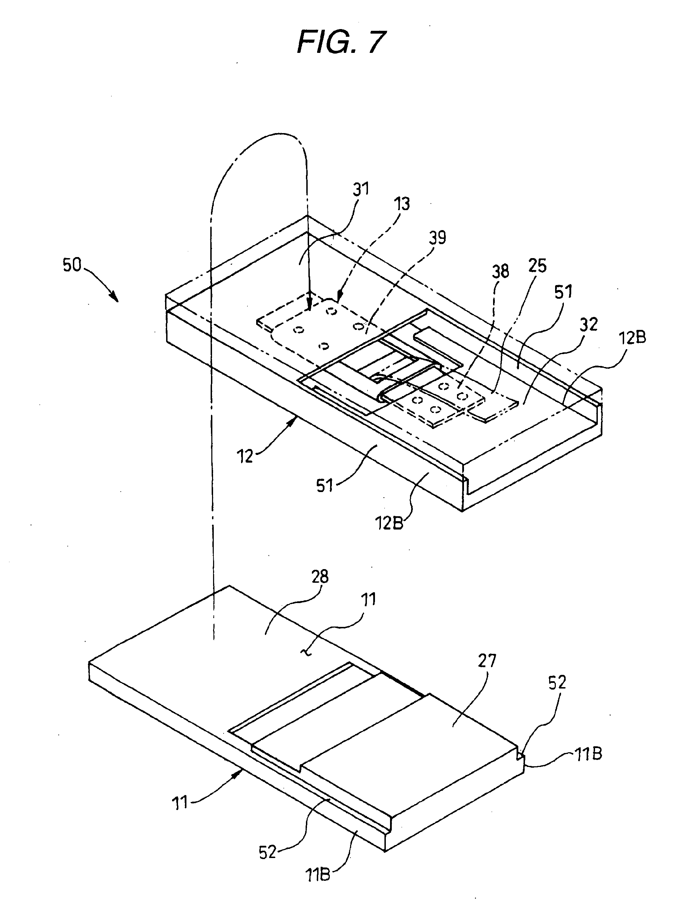

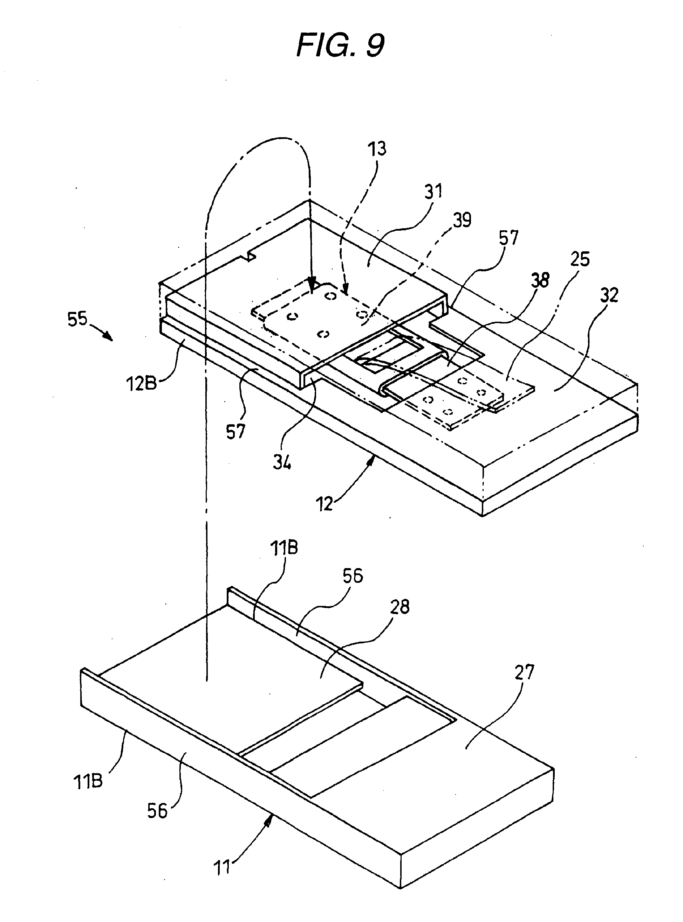

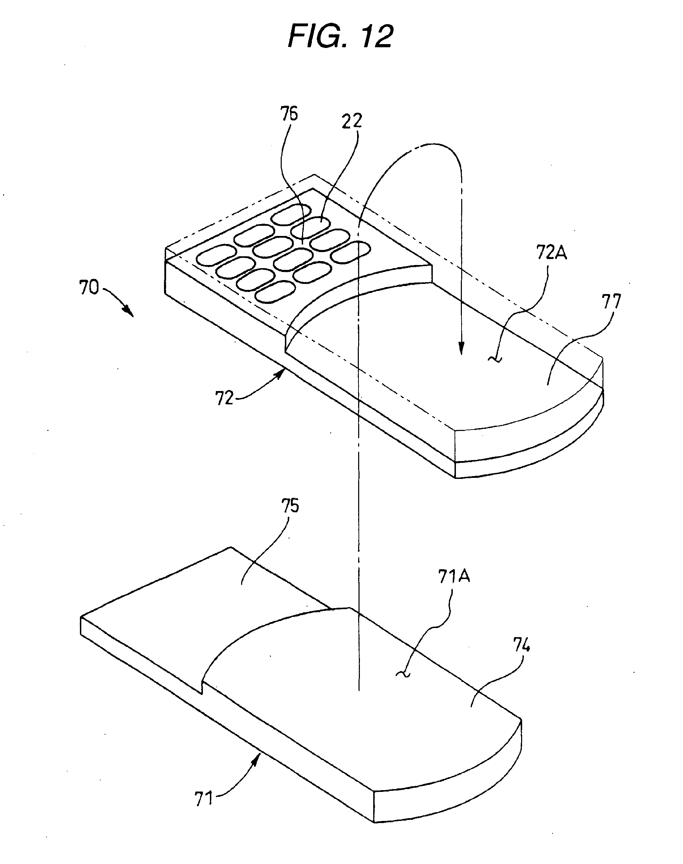

Next, portable terminals 50 in second to sixth embodiments will be described with reference to Figs. 6A to 14D. In the second to sixth embodiments, the same members as the components of the portable terminal 10 in the first embodiment are denoted by the same reference numerals, and the description of their members are omitted.
In a portable terminal 50 in the second embodiment shown in Figs. 6A to 7, wall parts 51 are provided on both sides 12B of a lower housing 12. Other constitution is similar to that of the portable terminal 10 in the first embodiment.

On the both sides 12B of the lower housing 12, the wall parts 51 are provided, and on both sides 11B of the upper housing 11, guide parts 52 are provided. The guide part 52 is a member for guiding the wall part 51 so that the portable terminal 50 can slide between the closing state and the opening state.
By providing the wall parts 51 on the both sides 12B of the lower housing 12, the sides of a gap 48 (Fig. 1B and Fig. 5B) can be covered with the respective wall parts 51.

According to the portable terminal 50 in the second embodiment, since the wall parts 51 which cover the sides of the gap 48 are provided on the lower housing 12, the exposure of a flexible printed board 25 can be prevented by the wall parts 51 when the portable terminal 50 is in the opening state, so that the flexible printed board 25 can be protected.
Further, by providing the wall parts 51 which cover the sides of the gap 48, good grippable function by user can be secured.
In addition, according to the portable terminal 50 in the second embodiment, the advantages similar to those in the portable terminal 10 in the first embodiment can be obtained.

### THIRD EMBODIMENT

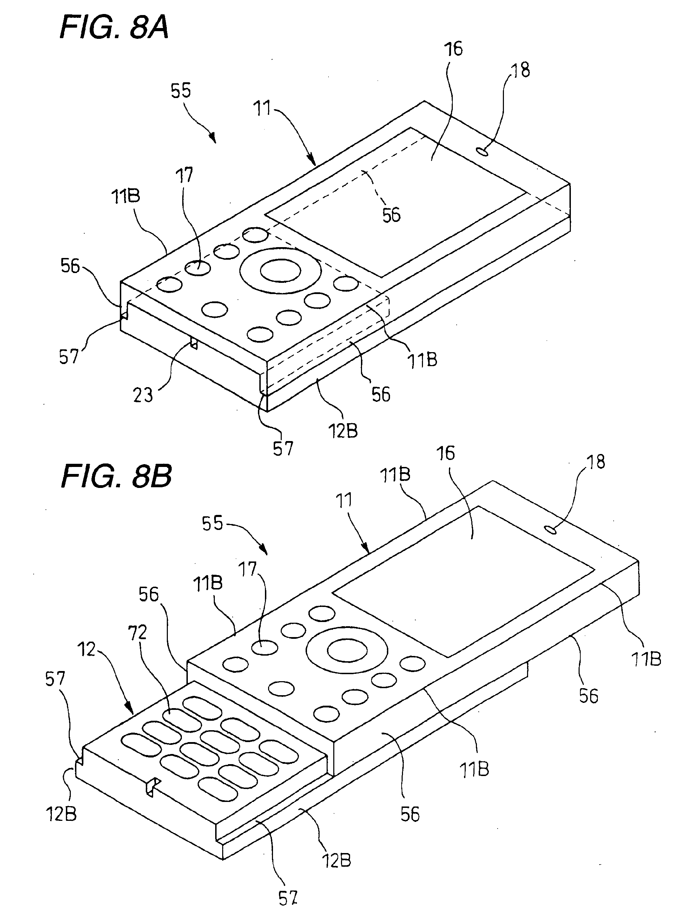

In a portable terminal 55 in a third embodiment shown in Figs. 8A to 9, wall parts 56 are provided on both sides 11B of an upper housing 11. Other constitution is similar to that of the portable terminal 50 in the second embodiment.
On the both sides 11B of the upper housing 11, the wall parts 56 are provided, and on both sides 12B of a lower housing 12, guide parts 57 are provided. The guide part 57 is a member for guiding the wall part 56 so that the portable terminal 55 can slide between the closing state and the opening state.
By providing the wall parts 56 on the both sides 11B of the upper housing 11, the sides of a gap 48 can be covered with the respective wall parts 56.

According to the portable terminal 55 in the third embodiment, since the wall parts 56 which cover the sides of the gap 48 are provided on the upper housing 11, the exposure of a flexible printed board 25 can be prevented by the wall parts 56 when the portable terminal 55 is in the opening state, so that the flexible printed board 25 can be protected.

Further, by providing the wall parts 56 which cover the sides of the gap 48, good grippable function by user can be secured.
Namely, according to the portable terminal 55 in the third embodiment, the advantages similar to those in the portable terminal 50 in the second embodiment can be obtained.
Considering that good grippable function by user is secured, it is desirable that the wall 51 is provided on the lower housing 12 as in the portable terminal 50 in the second embodiment.

### FOURTH EMBODIMENT

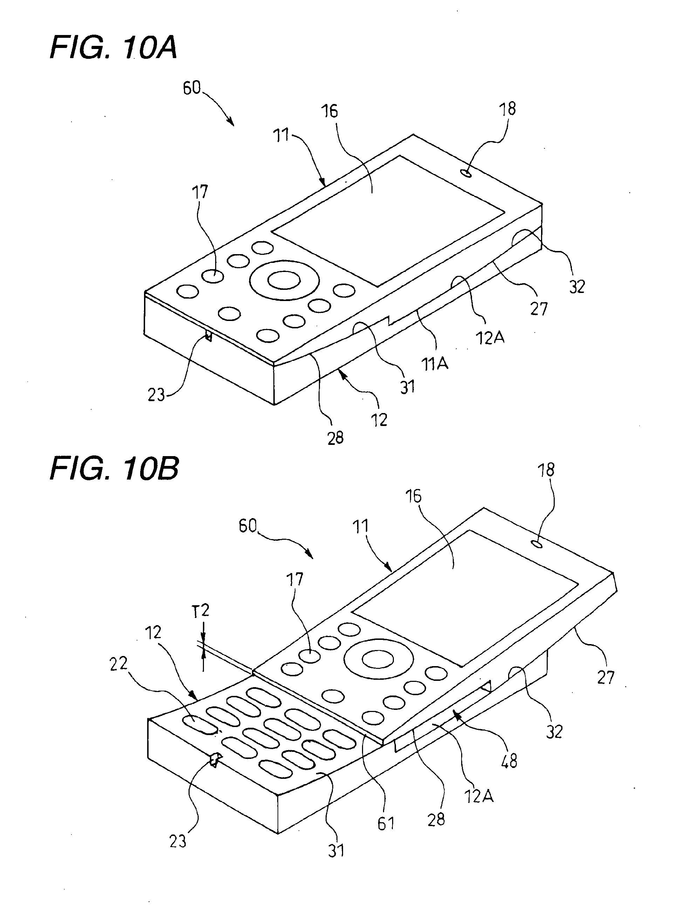

In a portable terminal 60 in a fourth embodiment shown in Figs. 10A and 10B, a back surface 11A of an upper housing 11 is formed in the shape of a convex curve, and a surface 12A of a lower housing 12 is formed in the shape of a concave curve. Other constitution is similar to that of the portable terminal 10 in the first embodiment.

Namely, in the portable terminal 60, of the back surface 11A of the upper housing 11, a first projection part 27 and a first flat part 28 are formed in the shape of a convex curve; and of the surface 12A of the lower housing 12, a second projection part 31 and a second flat part 32 are formed in the shape of a concave curve.
By forming the first flat part 28 of the upper housing 11 in the shape of a convex curve, a thickness dimension T2 of the first flat part 28 can be made smaller than the thickness dimension T1 (refer to Fig. 1B) in the first embodiment.

Therefore, according to the portable terminal 60 in the fourth embodiment, in the opening state of the portable terminal 60, the dimension T2 of a step 61 formed by a sub-operational part 17 of the upper housing 11 and a main operational part 22 of the lower housing 12 can be made smaller than the thickness dimension T1 (refer to Fig. 1B) in the first embodiment.

Hereby, when the main operational part 22 of the lower housing 12 and the sub-operational part 17 of the upper housing 11 are operated in combination, smoother operation can be obtained.
Further, according to the portable terminal 60 in the fourth embodiment, the advantages similar to those in the portable terminal 10 in the first embodiment can be obtained.

### FIFTH EMBODIMENT

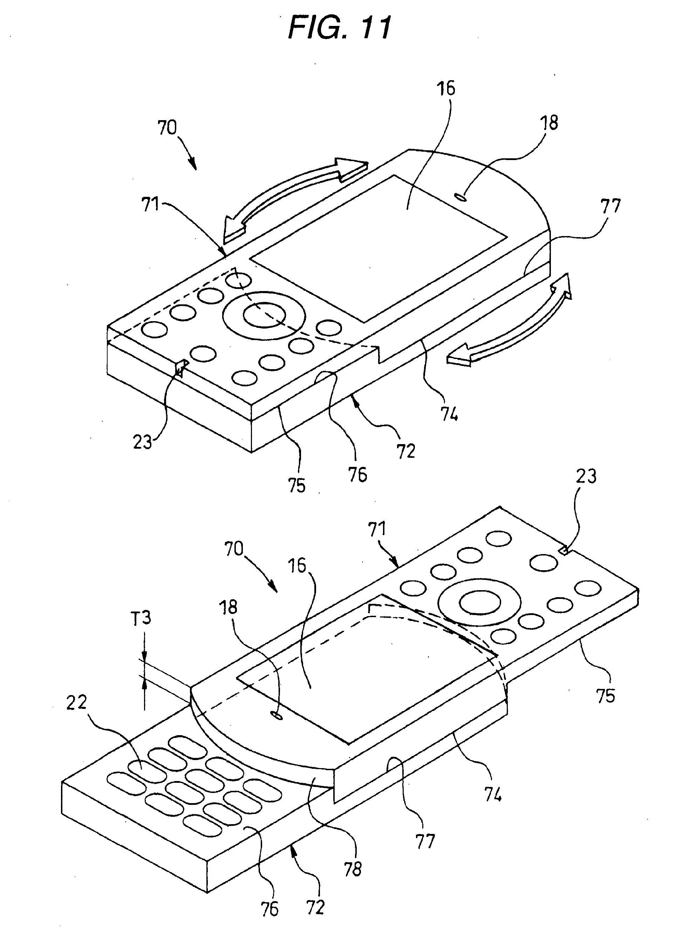

A portable terminal 70 in a fifth embodiment shown in Figs. 11 to 12 is a revolver type in which an upper housing 71 is constituted so that the upper housing 71 can revolve in relation to a lower housing 72 in parallel in a direction of an arrow. Other constitution is similar to that of the portable terminal 10 in the first embodiment.

The upper housing 71 has on a back surface 71A a first projection part (second part) 74 provided in a position corresponding to a display part 16, and a first flat part (first part) 75 adjacent to the first projection part 74.
Therefore, the back surface 71A of the upper housing 71 is formed concavely at the first flat part 75, and formed convexly at the first projection part 74.

The lower housing 72 has on a surface 72A a second projection part (fourth part) 76 provided in a position corresponding to a main operational part 22, and a second flat part (third part) 77 adjacent to the second projection part 76.
Therefore, the surface 72A of the lower housing 72 is formed concavely at the second flat part 77, and formed convexly at the second projection part 76.

The first projection part 74 and the first flat part 75 of the upper housing 71, and the second projection part 76 and the second flat part 77 of the lower housing 72 are constituted so that the first projection part 74 faces to the second flat part 77 and the second projection part 76 faces to the first flat part 75 in the closing state of the portable terminal 70 shown in Fig. 11A. Hereby, the thickness of the portable terminal 70 can be reduced as a whole.

On the other hand, in case that the upper housing 71 is revolved in the direction of the arrow and the portable terminal 70 is put in the opening state shown in Fig. 11A, the first projection part 74 is adjacent to the second projection part 76, and a different-in-level portion 78 is formed by the first projection part 74 and the second projection part 76.

Since the first projection part 74 faces to the second flat part 77 which becomes a concave part of the lower housing 72, the projection amount of the first projection part 74 from the second projection part 76 can be restrained. Hereby, a dimension T3 of the different-in-level portion 78 can be made smaller than that in the conventional portable terminal.
Accordingly, in case that the display part 16 includes a tough panel function and is used as a sub-operational part, when the main operational part 22 of the lower housing 72 and the sub-operational part (touch panel of the display part 16) of the upper housing 71 are operated in combination, smooth operation can be obtained.

Further, according to the portable terminal 70 in the fifth embodiment, since the portable terminal 70 is the revolver type, in case that the portable terminal 70 is in the opening state, a gap 48 (refer to Figs. 1B and 5B) is not produced as in the case of the portable terminal 10 in the first embodiment.
In addition, according to the portable terminal 70 in the fifth embodiment, the advantages similar to those in the portable terminal 10 in the first embodiment can be obtained.

### Sixth embodiment

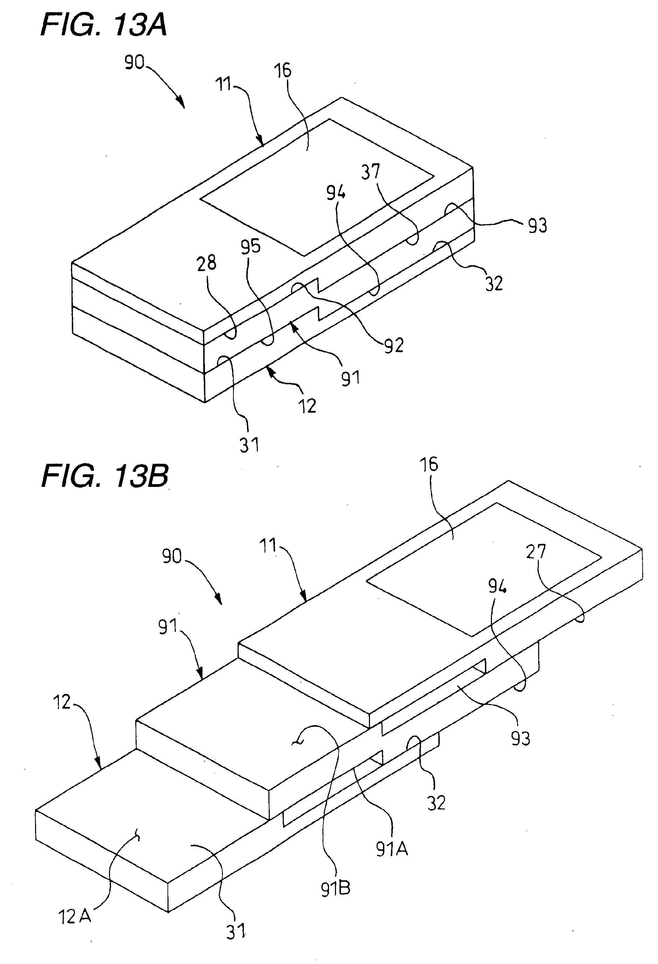

A portable terminal 90 in a sixth embodiment shown in Figs. 13A and 13B has three-layer structure, in which an intermediate housing 91 is interposed between the upper housing 11 and the lower housing 12 in the first embodiment. Other constitution is similar to that of the portable terminal 10 in the first embodiment.

The intermediate housing 91 has, on its surface 91A, a third projection part 92 provided in a position corresponding to a first flat part 28, and a third flat part 93 which is adjacent to the third projection part 92 and provided in a position corresponding to a first projection part 27.
Further, the intermediate housing 91 has, on its back surface 91B, a fourth projection part 94 provided in a position corresponding to a second flat part 32, and a fourth flat part 95 which is adjacent to the fourth projection part 94 and provided in a position corresponding to a second projection part 31.

The portable terminal 90 is constituted so that the first projection part 27 faces to the third flat part 93 and the third projection part 92 faces to the first flat part 28 in the closing state of the portable terminal 90, and so that the second projection part 31 faces to the fourth flat part 95 and the fourth projection part 94 faces to the second flat part 32.
Hereby, in the closing state, the thickness of the portable terminal 90 can be reduced as a whole.

Further, according to the portable terminal 90 in the sixth embodiment, since the intermediate housing 91 is interposed between the upper housing 11 and the lower housing 12 thereby to provide the three-layer structure, a large amount of sliding in the opening state can be secured.
In addition, according to the portable terminal 90 in the sixth embodiment, the advantages similar to those in the portable terminal 10 in the first embodiment can be obtained.

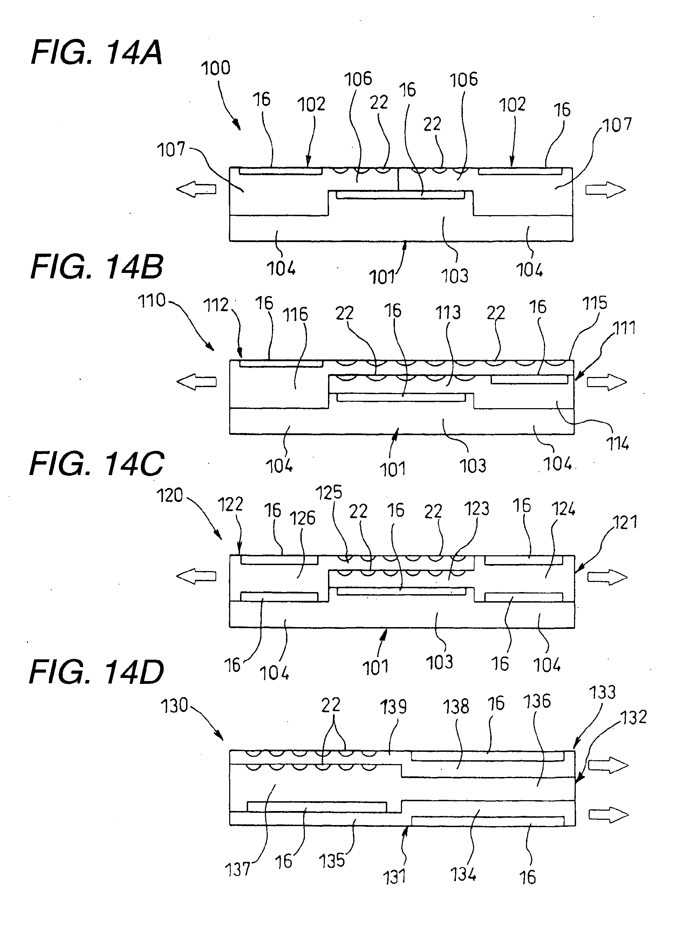

Next, modified examples of the portable terminal 90 in the sixth embodiment will be described with reference to Figs. 14A to 14D.

### MODIFIED EXAMPLE 1

In a portable terminal 100 in a first modified example shown in Fig. 14A, a lower housing 101 and a pair of upper housings 102 are laminated.
The lower housing 101 has a second projection part 103 provided in the center, and a pair of second flat parts 104 provided on both sides of the second projection part 103. On a surface of the second projection part 103, a display part 16 is provided.

The upper housing 102 has a first flat part 106 in a position facing to the second projection part 103, and a first projection part 107 in a position facing to the second flat part 104. A display part 16 is provided on the first projection part 107; and an operational part 22 is provided on the first flat part 106.
In case that the portable terminal 100 is extended, a pair of upper housings 102 is slid and moved in a direction of an arrow.

As described above, according to the portable terminal 100, the surface of the lower housing 101 is formed concavo-convexly, and the back surface of the upper housing 102 is formed concavo-convexly. Hereby, in the closing state of the portable terminal 100, the concave portions and the convex portions of the housings 101, 102 are faced to each other, whereby the thickness of the portable terminal 100 can be reduced as a whole.
In addition, according to the portable terminal 100 in the first modified example, the advantages similar to those in the portable terminal 90 in the sixth embodiment can be obtained.

### MODIFIED EXAMPLE 2

In a portable terminal 110 in a second modified example shown in Fig. 14B, a lower housing 101, an intermediate housing 111 and an upper housing 112 are laminated.
The intermediate housing 111 has a third flat part 113 in a position facing to a second projection part 103, and a third projection part 114 in a position facing to a second flat part 104. A display part 16 is provided on the third projection part 114; and an operational part 22 is provided on the third flat part 113.

The upper housing 112 has a first flat part 115 in a position facing to a surface of the intermediate housing 111, and a first projection part 116 in a position facing to the second flat part 104 of the lower housing 101. A display part 16 is provided on the first projection part 116; and an operational part 22 is provided on the first flat part 115.
In case that the portable terminal 110 is extended, the intermediate housing 111 and the upper housings 112 are slid and moved in a direction of an arrow.

As described above, according to the portable terminal 110, the surface of the lower housing 101 is formed concavo-convexly, the back surface of the intermediate housing 111 is formed concavo-convexly and the back surface of the upper housing 112 is formed concavo-convexly. Hereby, in the closing state of the portable terminal 110, the concave portions and the convex portions of the housings 101, 111, and 112 are faced to each other, whereby the thickness of the portable terminal 110 can be reduced as a whole.
In addition, according to the portable terminal 110 in the second modified example, the advantages similar to those in the portable terminal 90 in the sixth embodiment can be obtained.

### MODIFIED EXAMPLE 3

In a portable terminal 120 in a third modified example shown in Fig. 14C, a lower housing 101, an intermediate housing 121 and an upper housing 122 are laminated.
The intermediate housing 121 has a third flat part 123 in a position facing to a second projection part 103, and a third projection part 124 in a position facing to a second flat part 104. Display parts 16 are provided on both sides of the third projection part 124; and an operational part 22 is provided on the third flat part 123.

The upper housing 122 has a first flat part 125 in a position facing to the third flat part 123 of the intermediate housing 121, and a first projection part 126 in a position facing to the second flat part 104 of the lower housing 101. A display part 16 is provided on the first projection part 126; an operational part 22 is provided on the first flat part 125.
In case that the portable terminal 120 is extended, the intermediate housing 121 and the upper housings 122 are slid and moved in a direction of an arrow.

As described above, according to the portable terminal 120, the surface of the lower housing 101 is formed concavo-convexly, the intermediate housing 121 is formed concavo-convexly and the back surface of the upper housing 122 is formed concavo-convexly. Hereby, in the closing state of the portable terminal 120, the concave portions and the convex portions of the housings 101, 121, and 122 are faced to each other, whereby the thickness of the portable terminal 110 can be reduced as a whole.
In addition, according to the portable terminal 120 in the third modified example, the advantages similar to those in the portable terminal 90 in the sixth embodiment can be obtained.

### MODIFIED EXAMPLE 4

In a portable terminal 130 in a fourth modified example shown in Fig. 14D, a lower housing 131, an intermediate housing 132 and an upper housing 133 are laminated.
The lower housing 131 has a second projection part 134, and a second flat part 135 which is adjacent to the second projection part 134. On a back surface of the second projection part 134, a display part 16 is provided.

The intermediate housing 132 has a third flat part 136 in a position facing to a second projection part 134, and a third projection part 137 in a position facing to a second flat part 135. On a back surface of the third projection part 137, a display part 16 is provided; and on a surface of the third projection part 137, an operational part 22 is provided.

The upper housing 133 has a first projection part 138 in a position facing to the third flat part 136, and a first flat part 139 in a position facing to the third flat part 137. A display part 16 is provided on the first projection part 138; and, an operational part 22 is provided on the first flat part 139.
In case that the portable terminal 130 is extended, the lower housing 131 and the upper housings 132 are slid and moved in a direction of an arrow.

As described above, according to the portable terminal 130, the surface of the lower housing 131 is formed concavo-convexly, the intermediate housing 132 is formed concavo-convexly and the back surface of the upper housing 122 is formed concavo-convexly. Hereby, in the closing state of the portable terminal 130, the concave portions and the convex portions of the housings 131, 132, and 133 are faced to each other, whereby the thickness of the portable terminal 130 can be reduced as a whole.
In addition, according to the portable terminal 130 in the fourth modified example, the advantages similar to those in the portable terminal 90 in the sixth embodiment can be obtained.

Although the example in which the rail 38 is provided on the back surface 11A of the upper housing 11, and the engagement part 39 is provided on the surface 11A of the lower housing 12 has been described in the above embodiment, the invention is not to this example. The engagement part 39 may be provided on the back surface 11A of the upper housing 11, and the rail 39 may be provided on the surface 12A of the lower housing 12. Also in such case, the similar advantages can be obtained.
In case that the rail 38 is provided on the surface 12A of the lower housing 12, the leading end 38B is arranged in the first projection part 27 in the closing state of the portable terminal 10.

Further, in the aforesaid embodiments, the second part and the fourth part which are formed in the shape of a rectangular solid are respectively formed in relation to the first part and the third part. Hereby, the steps are formed between the first part and the third part, and the second part and the fourth part. However, in relation to the first part and the third part, the second part and the fourth part may be formed in the shape of a curved projection having no step, and this example is also included in the invention.

### INDUSTRIAL APPLICABILITY

The invention is suitable to be applied to a portable terminal which can select a closing state in which a first housing and a second housing are laminated so that a back surface of the first housing and a surface of the second housing are face to each other, and an opening state in which the back surface of the first housing and the surface of the second housing move relatively to each other in parallel and are arranged on different levels.

## Claims

1. A portable terminal which comprises: a first housing and a second housing coupled to each other through a coupling part; and which can take a closing state in which the first housing and the second housing are superimposed on each other through the coupling part, and an opening state in which the portable terminal extends by sliding the first housing and the second housing, **characterized in that:**
the first housing is constituted so that a thickness of an end of the first housing in a moving direction when the closing state of the portable terminal changes to the opening state thereof is made thicker than a thickness of an opposite side end;
the second housing is constituted so that a thickness of an end of the second housing in the moving direction when the closing state of the portable terminal changes to the opening state thereof is made thinner than a thickness of an opposite side end;
in the closing state, the opposite side end of the first housing and the opposite side end of the second housing are superimposed;
in the opening state, the opposite side end of the first housing and the end in the moving direction of the second housing are superimposed; and
when the closing state changes to the opening state, a gap is formed in the moving direction by the first housing and the second housing.

2. A portable terminal which comprises: a first housing and a second housing coupled to each other through a coupling part; and which can take a closing state in which the first housing and the second housing are superimposed on each other through the coupling part, and an opening state in which the portable terminal extends by sliding the first housing and the second housing, **characterized in that:**
the first housing includes a first part and a second part which is thicker in a thickness direction than the first part;
the second housing includes a third part and a fourth part which is thicker in the thickness direction than the third part; and
in the closing state of the portable terminal, the first part of the first housing faces to the fourth part of the second housing, and the second part of the first housing faces to the fourth part of the second housing.

3. The portable terminal according to either Claim 1 or Claim 2, further comprising a first circuit board housed in the first housing, a second circuit board housed in the second housing, and a flexible wiring member which connects the first circuit board and the second circuit board, **characterized in that**
the flexible wiring member is arranged in a gap formed between the second part and the fourth part in the opening state of the portable terminal.

4. The portable terminal according to Claim 3, **characterized in that** a wall part which covers sides of said gap is provided on one of the first housing and the second housing.

5. A portable terminal which comprises:
a first housing and a second housing coupled to each other through a coupling part;
a display part provided on a surface of the first housing; and
an operational part provided on a surface of the second housing, and
in which the coupling part includes a rail provided on one of a back surface of the first housing and the surface of the second housing, and an engagement part which is provided on the other of the back surface of the first housing and the surface of the second housing to engage with the rail; and a closing state in which the first housing and the second housing are superimposed on each other through the coupling part by moving the first housing and the second housing relatively to each other through the coupling part, and an opening state in which the portable terminal extends by sliding the first housing and the second housing can be taken,
**characterized in that:**
the first housing includes a first part and a second part which is thicker in the thickness direction than the first part;
the second housing includes a third part and a fourth part which is thicker in the thickness direction than the third part;
in the closing state of the portable terminal, the first part of the first housing faces to the fourth part of the second housing, and the second part of the first housing faces to the fourth part of the second housing; and
an end of the rail is housed in one of the first housing and the second housing.
